Europäisches Patentamt

European Patent Office

Office européen des brevets

(19)

(11) Veröffentlichungsnummer: **0 448 086 A2**

## (12) EUROPÄISCHE PATENTANMELDUNG

(21) Anmeldenummer: 91104363.6

(22) Anmeldetag: 20.03.91

(51) Int. Cl.5: **G09G 1/14**, H04N 5/16, H04N 5/57

(30) Priorität: 20.03.90 DE 4008946

(43) Veröffentlichungstag der Anmeldung:
25.09.91 Patentblatt 91/39

(84) Benannte Vertragsstaaten:
AT BE CH DE DK ES FR GB GR IT LI LU NL SE

(71) Anmelder: **Siemens Nixdorf Informationssysteme Aktiengesellschaft Fürstenallee 7 W-4790 Paderborn(DE)**

(72) Erfinder: **Hunold, Tobias Nuhnestrasse 23 W-5788 Winterberg(DE)**

(74) Vertreter: **Schaumburg, Thoenes & Englaender Mauerkircherstrasse 31 Postfach 86 07 48 W-8000 München 86(DE)**

(54) Schaltungsanordnung zum Ansteuern einer monochromen Bildröhre.

(57) Die Erfindung betrifft eine Schaltungsanordnung zum Ansteuern einer monochromen Bildröhre mit einem Bildsignalverstärker mit einstellbarer Verstärkung, dessen Eingangssignalpolarität zur Positiv- bzw. Negativdarstellung umschaltbar ist, wobei unterschiedliche Referenzpotentiale für die verstärkten Bildsignale vorgesehen sind. Das Referenzpotential für Positivdarstellung ist mit der Verstärkung des Bildsignalverstärkers (11, 12) so veränderbar, daß ein vorgebener maximaler Eingangsspannungshub stets einen Ausgangsspannungshub bis zu dem Referenzpotential für die Negativdarstellung erzeugt. Dadurch erübrigt sich eine Nachregelung des Kontrastes und/oder der Helligkeit nach Umschalten von Negativ- auf Positivdarstellung.

Fig.1

EP 0 448 086 A2

Die Erfindung betrifft eine Schaltungsanordnung zum Ansteuern einer monochromen Bildröhre mit einem Bildsignalverstärker mit einstellbarer Verstärkung, dessen Eingangssignalpolarität zur Positiv- bzw. Negativdarstellung umschaltbar ist, wobei unterschiedliche Referenzpotentiale für die verstärkten Bildsignale vorgesehen sind.

Bei der Informationsdarstellung auf dem Bildschirm einer monochromen Bildröhre können helle Zeichen auf dunklem Hintergrund oder dunkle Zeichen auf hellem Hintergrund erzeugt werden. Die erste Darstellungsart wird als Negativdarstellung, die zweite als Positivdarstellung bezeichnet. Die Ansteuerschaltungen von Bildröhren sind zum Wechsel der Darstellungsart umschaltbar, wozu die dem Bildsignalverstärker zugeführten Bildsignale negiert werden können bzw. eine bestehende Negation aufgehoben werden kann. Gleichzeitig ist es dabei erforderlich, für jede Darstellungsart ein Referenzpotential für die verstärkten Bildsignale einzustellen, denn die der Bildröhre zugeführten Bildsignale müssen auf ein dem jeweiligen Hintergrundwert entsprechendes Potential bezogen werden. Bei der Schwarz-Weiß-Darstellung ist dies bei Negativdarstellung ein Schwarzpotential, bei Positivdarstellung ein Weißpotential.

Welche Intensität bzw. Helligkeit dieses Weißpotential auf dem Bildschirm erzeugt, ist unabhängig vom Bildsignalverstärker von einer Helligkeitseinstellung abhängig, die an einem zweiten Steuereingang der Bildröhre vorgenommen wird. Das Referenzpotential bei Negativdarstellung wird beispielsweise auf einen Wert eingestellt, bei dem der Bildschirm gerade in den Schwarzzustand übergeht. Ausgehend von diesem Referenzpotential ist zur Kontraständerung die Verstärkung des Bildsignalverstärkers einstellbar. Je größer die Verstärkung eingestellt wird, umso größer wird bei gleichbleibendem Bildsignal der Ausgangsspannungshub des Bildsignalverstärkers und damit der Kontrast zwischen dem Hintergrundwert und dem dargestellten Zeichen. Wird die Darstellungsart umgeschaltet, wechselt auch das Referenzpotential für die Aussteuerung des Bildsignalverstärkers. Bei einer Kontrasteinstellung, die auf einem schwarzen Hintergrund ein graues Zeichen erzeugt, wird durch diese Umschaltung ein graues Zeichen auf einem weißen Hintergrund dargestellt. Um eine Darstellung als schwarzes Zeichen auf einem grauen Hintergrund zu erreichen, müssen die Helligkeit und/oder der Kontrast nachgeregelt werden.

Die Aufgabe der Erfindung besteht darin, eine Schaltungsanordnung zum Ansteuern einer monochromen Bildröhre anzugeben, die ein Nachregeln des Kontrastes und/oder der Helligkeit beim Umschalten zwischen Positiv- und Negativdarstellung überflüssig macht.

Die Erfindung löst diese Aufgabe bei einer Schaltungsanordnung eingangs genannter Art dadurch, daß das Referenzpotential für Positivdarstellung mit der Verstärkung des Bildsignalverstärkers so veränderbar ist, daß ein vorgegebener maximaler Eingangsspannungshub stets einen Ausgangsspannungshub bis zu dem Referenzpotential für die Negativdarstellung erzeugt.

Durch die Erfindung wird das Referenzpotential für die Positivdarstellung nicht auf einen fest vorgegebenen Wert umgeschaltet, sondern es wird mit der Verstärkung des Bildsignalverstärkers, also mit dessen Kontrasteinstellung, verändert. Diese Veränderung beim Umschalten wird bei der Erfindung so vorgenommen, daß bei einem Eingangssignal, das einen vorgegebenen maximalen Eingangsspannungshub aufweist, d.h. die Endwerte für Schwarz und Weiß erreicht, das Referenzpotential für die Positivdarstellung so verschoben wird, daß durch den Ausgangsspannungshub das Referenzpotential der Negativdarstellung erreicht wird. Damit wird für ein dunkel darzustellendes Zeichen durch den Ausgangsspannungshub der Hintergrundwert der Negativdarstellung erreicht, während der Hintergrund der Positivdarstellung durch ein Referenzpotential bestimmt wird, das dem Wert entspricht, der durch den Ausgangsspannungshub bei einem Zeichen in der Negativdarstellung erreicht wurde. Dadurch bleibt der Arbeitsbereich für die Signalaussteuerung erhalten, d.h. die Umschaltung von Negativauf Positivdarstellung ist nicht mehr mit einer Verlagerung des Arbeitsbereiches verbunden, so daß weder Kontrast noch Helligkeit nach einer solchen Umschaltung nachgeregelt werden muß.

Erfolgt die Verstärkungseinstellung des Bildsignalverstärkers durch ein Spannungssignal, so kann dieses Spannungssignal zusätzlich eine Schaltung zum Erzeugen eines dem Referenzpotential für die Positivdarstellung proportionalen Referenzsignals steuern.

Die an der Bildröhre einzustellenden Referenzpotentiale werden in der Ansteuerschaltung von diesen proportionalen Referenzsignalen abgeleitet, wobei diese als Führungsgröße für eine Regelung der Referenzpotentiale verwendet werden. Bei bekannter Abhängigkeit zwischen der Verstärkung des Bildsignalverstärkers und dem diese Verstärkung steuernden Spannungssignal kann die Schaltung zur Erzeugung des Referenzsignals für die Positivdarstellung von diesem Spannungssignal so gesteuert werden, daß das Referenzsignal entsprechend der Erfindung verschoben wird.

Ein Ausführungsbeispiel der Erfindung wird im folgenden an Hand der Zeichnung näher erläutert. Darin zeigen:

Fig. 1     eine Schaltungsanordnung nach der Erfindung,

Fig. 2     einen beispielsweisen Bildsignalverlauf für drei verschiedene Kontrastein-

Fig. 3    stellungen und Negativdarstellung und die Signalverläufe nach Fig. 2 für Positivdarstellung.

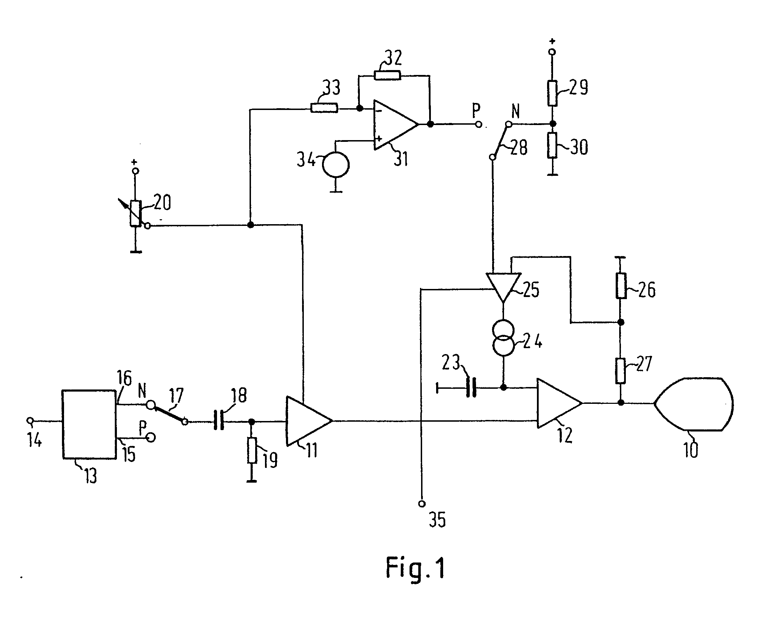

In Fig. 1 ist eine Ansteuerschaltung für eine Bildröhre 10 dargestellt. Diese Schaltung enthält als wesentliche Bestandteile zwei Verstärker 11 und 12, auf die die Gesamtverstärkung der durch sie gebildeten Bildsignalverstärkerschaltung aufgeteilt ist, und eine Eingangsstufe 13. Die Eingangsstufe 13 ist mit einem Signaleingang 14 verbunden und hat einen invertierenden Ausgang 15 und einen nicht invertierenden Ausgang 16. Ein Umschalter 17 dient zum Umschalten zwischen den invertierten und den nicht invertierten Ausgangssignalen der Eingangsstufe 13 und leitet diese Signale über einen Koppelkondensator 18 auf die erste Verstärkerstufe 11 mit einem Eingangswiderstand 19.

Die zweite Verstärkerstufe 12 verstärkt die Ausgangssignale der ersten Verstärkerstufe 11 und gibt die verstärkten Bildsignale an die Bildröhre 10 ab.

Die Verstärkungseinstellung der Gesamtverstärkung der Bildsignalverstärkerschaltung erfolgt durch ein Gleichspannungssignal, das an einem einstellbaren Widerstand 20 abgenommen wird und einem Steuereingang der ersten Verstärkerstufe 11 zugeführt wird. Mit diesem Spannungssignal wird also der Kontrast der Bilddarstellung auf der Bildröhre 10 eingestellt.

Die zweite Verstärkerstufe 12 hat einen zweiten Verstärkereingang, der mit einem Kondensator 23 verbunden ist, dessen zweiter Anschluß auf Massepotential liegt. Der Verstärkereingang ist ferner mit einer Stromquelle 24 verbunden, die durch einen Verstärker 25 gesteuert wird. Der Verstärker 25 wird seinerseits an einem ersten Eingang durch eine Spannung angesteuert, die an einem Spannungsteiler mit Widerständen 26 und 27 abgegriffen und somit der Ausgangsspannung der Verstärkerstufe 12 proportional ist, zum anderen wird er durch eine Gleichspannung angesteuert, die ihm über einen Umschalter 28 zugeführt wird. Diese Gleichspannung kann einerseits von einem Spannungsteiler mit Widerständen 29 und 30, andererseits von einem Verstärker 31 geliefert werden, der über einen Widerstand 32 gegengekoppelt ist. Dem invertierenden Eingang dieses Verstärkers 31 wird die Steuerspannung, die der ersten Verstärkerstufe 11 zugeführt wird, über einen Widerstand 33 zugeführt. Der nicht invertierende Verstärkereingang ist mit einer Referenzspannungsquelle 34 verbunden.

Es ist ferner ein Steuereingang 35 für die Ansteuerschaltung vorgesehen, der mit dem Vergleicher 25 verbunden ist und ein Synchronisationssignal liefert, das, wie an sich bekannt, auch zum Steuern des Zeilenrücklaufs der Bildröhre 10 verwendet wird. Diese Steuerung ist in Fig. 1 nicht dargestellt, ebenfalls nicht dargestellt ist die Schaltung zur Helligkeitsregelung der Bildröhre über einen zweiten Steuereingang, da die Erfindung hiermit keinen notwendigen Zusammenhang hat. Das Synchronisationssignal wird bei der hier gezeigten Schaltungsanordnung dazu verwendet, den Vergleicher 25 jeweils während des Zeilenrücklaufs der Bildröhre 10 wirksam zu schalten, so daß während der Zeilenrücklaufzeiten ein Regelkreis mit dem Spannungsteiler 26/27, dem Vergleicher 25 und der Stromquelle 24 existiert, an dem der Kondensator 23 aufgeladen wird. Dieses Aufladen erfolgt auf ein Potential, das durch die jeweils von dem Umschalter 28 gelieferte Spannung vorgegeben ist. Die von dem Spannungsteiler mit den Widerständen 29 und 30 abgegebene Spannung ist so zu bemessen, daß sie einem Referenzpotential für die Negativdarstellung proportional ist. Der Vergleicher 25 gibt so lange ein Ausgangssignal zum Aufladen des Kondensators 23 aus der Stromquelle 24 ab, bis die von dem Spannungsteiler 29/30 gelieferte Spannung der Spannung an seinem anderen Steuereingang entspricht, die von dem Spannungsteiler 26/27 abgegeben wird. Durch Bemessen der Widerstände 29 und 30 kann die von diesen abgegebene Spannung so dimensioniert werden, daß das bei Gleichheit der Signale an den Eingängen des Vergleichers 25 am Kondensator 23 erhaltene Potential dem Referenzpotential für den Schwarzwert bei Negativdarstellung entspricht. Entsprechend ist die in Fig. 1 gezeigte Schalterstellung des Umschalters 28 mit N bezeichnet. Gleiches gilt für die Schalterstellung des Umschalters 17. Wenn dieser auf die Stellung P umgeschaltet wird, so werden die Ausgangssignale der Eingangsstufe 13 invertiert, so daß die Informationszeichen mit der Bildröhre 10 dunkel auf hellem Hintergrund dargestellt werden. Hierzu muß auch der Umschalter 28 auf die Stellung P umgeschaltet werden, so daß er mit dem Umschalter 17 zweckmäßig mechanisch gekoppelt ist. In der Stellung P des Umschalters 28 wird dem Vergleicher 25 nun eine Spannung zugeführt, die von dem gegengekoppelten Verstärker 31 abgegeben und auf das Referenzpotential der Referenzspannungsquelle 34 bezogen ist. Diese Spannung ist kontrastabhängig, da sie über den Verstärker 31 der Steuerspannung proportional ist, die von dem einstellbaren Widerstand 20 zur Verstärkungs- bzw. Kontrasteinstellung abgegeben wird.

Sie wird durch die die Verstärkungseinstellung des Verstärkers 31 bestimmenden Widerstände 32, 33 und die Spannung der Referenzspannungsquelle 34 dimensioniert. Die Spannung der Referenzspannungsquelle 34 ist bei dieser Dimensionierung von der Spannung des Spannungsteilers 29/30 und damit vom Referenzpotential der Negativdarstellung abhängig, sowie von einem in der Steuerspannung möglicherweise vorhandenen Offset bei minimaler Verstärkungseinstellung. In die Verstärkungseinstellung gehen der vorgegebene maximale Eingangsspannungshub, das Verhältnis von Steuerspannung zur Verstärkungseinstellung des Bildsignalverstärkers sowie das Verhältnis von Referenzpotential zu der Führungsgröße des Vergleichers 25 ein.

Durch die Ausgangsspannung des Verstärkers 31 wird dem Vergleicher 25 eine andere Eingangsspannung zugeführt, die mit dem Potential des Spannungsteilers 26/27 zu vergleichen ist und zur Aufladung des Kondensators 23 führt. Der Kondensator 23 wird somit auf eine andere Spannung aufgeladen, die den Bezugswert für den Hintergrund bei Positivdarstellung angibt. Diese Spannung hängt von der Höhe der jeweils vom Verstärker 31 gelieferten Spannung ab.

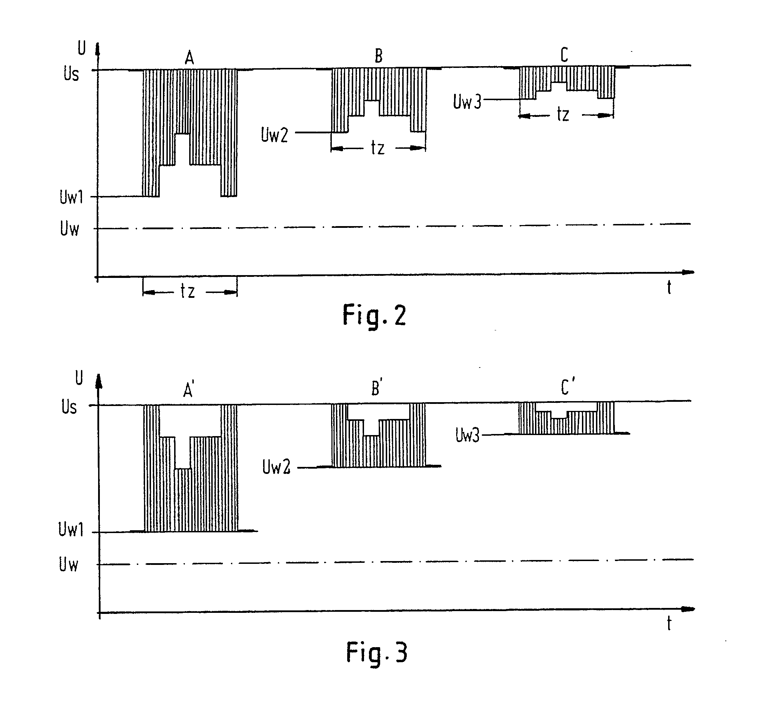

In Fig. 2 ist dargestellt, wie die in Fig. 1 gezeigte Schaltung bei Negativdarstellung arbeitet, für die sich der Umschalter 28 in der Stellung N befindet. Es sind drei verschiedene Signalverläufe über der Zeit dargestellt, die am Ausgang der zweiten Verstärkerstufe 12 auftreten und somit Eingangssignale zur Ansteuerung der Bildröhre 10 sind. Die Signalverläufe sollen jeweils einer auf der Bildröhre 10 darzustellenden Bildzeile entsprechen und treten daher innerhalb einer Bildzeilenzeit tz auf. Sie unterscheiden sich durch die an der Verstärkerstufe 11 jeweils eingestellte Verstärkung, jedoch stimmen sie in ihrem Informationsgehalt überein. Die Aussteuerung erfolgt bei dem ersten Signalverlauf zwischen einem Schwarzpotential Us und einem Weißpotential Uw1, bei dem zweiten Signalverlauf zwischen dem Schwarzpotential Us und einem Weißpotential Uw2 und bei dem dritten Signalverlauf C zwischen dem Schwarzpotential Us und einem Weißpotential Uw3. Jede Aussteuerung liegt zwischen dem Schwarzpotential Us und einem Weißpotential Uw, das dem Weißwert entspricht. Somit sind die Weißpotentiale Uw1, Uw2 und Uw3 Graupotentiale.

Wenn die Signalverläufe nach Fig. 2 durch Umschalten des Umschalters 17 auf die Schalterstellung P (Fig. 1) invertiert werden, so ergibt sich die in Fig. 3 gezeigte Situation. Die Form der Signalverläufe A', B' und C' ist spiegelbildlich zu der Form der Signalverläufe A, B und C in Fig. 2. Dies gilt auch für die Höhe der Weißpotentiale Uw1, Uw2 und Uw3, die so bemessen ist, daß mit der jeweiligen, kontrastabhängig eingestellten Aussteuerung stets der Schwarzwert Us erreicht wird.

Würde das Bezugspotential, das für die Positivdarstellung über den Umschalter 28 an den Vergleicher 25 geliefert wird, lediglich von einem anders dimensionierten Spannungsteiler abgegeben, so wäre es für alle Signalverläufe A', B' und C' so bemessen, daß der konstante Weißwert Uw maßgebend wäre. Die in Fig. 3 dargestellten Signalverläufe A', B' und C' würden dann übereinstimmende Weißwerte Uw haben und nicht den Schwarzwert Us erreichen. Die dann erforderliche Nachstellung des Kontrastes und/oder der Helligkeit beim Umschalten von Negativ- auf Positivdarstellung wird also durch die Erfindung vermieden.

**Patentansprüche**

1. Schaltungsanordnung zum Ansteuern einer monochromen Bildröhre mit einem Bildsignalverstärker mit einstellbarer Verstärkung, dessen Eingangssignalpolarität zur Positiv- bzw. Negativdarstellung umschaltbar ist, wobei unterschiedliche Referenzpotentiale für die verstärkten Bildsignale vorgesehen sind, dadurch **gekennzeichnet**, daß das Referenzpotential für Positivdarstellung mit der Verstärkung des Bildsignalverstärkers (11, 12) so veränderbar ist, daß ein vorgegebener maximaler Eingangsspannungshub stets einen Ausgangsspannungshub bis zu dem Referenzpotential für die Negativdarstellung erzeugt.

2. Schaltungsanordnung nach Anspruch 1, dadurch **gekennzeichnet**, daß ein Spannungssignal zur Verstärkungseinstellung zusätzlich eine Schaltung (31 bis 34) zum Erzeugen eines dem Referenzpotential für die Positivdarstellung proportionalen Referenzsignals steuert.

Fig.1

Fig. 2

Fig. 3